(19) Europäisches Patentamt
European Patent Office
Office européen des brevets

(11) **EP 2 218 078 B1**

(12) **FASCICULE DE BREVET EUROPEEN**

(45) Date de publication et mention
de la délivrance du brevet:
**08.01.2014 Bulletin 2014/02**

(21) Numéro de dépôt: **08857859.6**

(22) Date de dépôt: **21.11.2008**

(51) Int Cl.:
***G21C 17/00*** *(2006.01)*   ***G21D 3/00*** *(2006.01)*

(86) Numéro de dépôt international:
**PCT/FR2008/052104**

(87) Numéro de publication internationale:
**WO 2009/071817 (11.06.2009 Gazette 2009/24)**

(54) **PROCÉDÉ DE DÉTERMINATION DE LA VALEUR D'UN PARAMÈTRE REPRÉSENTATIF DE LA MANOEUVRABILITÉ D'UN RÉACTEUR NUCLÉAIRE**

VERFAHREN ZUR ERMITTLUNG DES ZAHLENWERTES EINER DIE STEUERBARKEIT EINES KERNREAKTORS REPRÄSENTIERENDEN KENNGRÖSSE

METHOD OF DETERMINING THE VALUE OF A PARAMETER REPRESENTATIVE OF THE OPERABILITY OF A NUCLEAR REACTOR

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **07.12.2007 FR 0759643**

(43) Date de publication de la demande:
**18.08.2010 Bulletin 2010/33**

(73) Titulaire: **Areva NP**
**92400 Courbevoie (FR)**

(72) Inventeurs:
• **ANDRE POYAUD, Gilles**
**F-69005 Lyon (FR)**

• **JULIEN, Bruno**
**F-69006 Lyon (FR)**
• **MOURLEVAT, Jean-Lucien**
**F-78590 Noisy Le Roi (FR)**

(74) Mandataire: **Blot, Philippe Robert Emile**
**Cabinet Lavoix**
**2, place d'Estienne d'Orves**
**75441 Paris Cedex 09 (FR)**

(56) Documents cités:
**EP-A- 0 405 863      EP-A- 1 113 455**
**EP-A- 1 221 701      FR-A- 2 846 139**

**Description**

La présente invention concerne un procédé de détermination de la valeur d'un paramètre représentatif de la manoeuvrabilté d'un réacteur nucléaire.

L'invention s'applique, par exemple, aux réacteurs à eau pressurisée.

De manière classique, le coeur d'un tel réacteur est chargé d'assemblages de combustible nucléaire.

Chaque assemblage comprend un faisceau de crayons de combustible nucléaire, les crayons comprenant une gaine renfermant des pastilles de combustible nucléaire.

Il peut être utile, notamment dans des pays comme la France où 80% de l'électricité est produite par des réacteurs nucléaires, que la puissance globale fournie par les réacteurs varie afin de s'adapter aux besoins du réseau électrique qu'ils alimentent.

En particulier, il est souhaitable de pouvoir faire fonctionner les réacteurs à puissance globale réduite pendant une longue période où la demande du réseau est faible, avant de revenir si nécessaire à puissance globale nominale.

Pour autant, une telle exploitation de chaque réacteur, qui permet de mieux exploiter ses capacités, ne doit pas induire de problème de sûreté.

Un des phénomènes limitant la manoeuvrabilité des réacteurs nucléaires est notamment le phénomène d'Interaction Pastille/Gaine (IPG) ou Pellet/Cladding Interaction (PCI) en anglais.

En effet, lorsque le réacteur fonctionne à sa puissance globale nominale PN, les crayons de combustible nucléaire sont, selon le terme employé dans la technique, conditionnés.

Pour un crayon donné, le conditionnement se caractérise essentiellement par la fermeture du jeu radial entre les pastilles et la gaine, due au fluage de la gaine et au gonflement des pastilles.

S'il n'y a pas de risque de rupture de la gaine en régime permanent du fait de l'équilibre thermomécanique dans la gaine à des niveaux de contraintes assez faibles, un risque apparaît par contre dès que la puissance fournie par le crayon considéré varie fortement. férence de température entre la pastille à base d'oxyde d'uranium et la gaine habituellement en alliage de zirconium, la pastille va se dilater davantage que la gaine et imposer sa déformation à cette dernière.

Par ailleurs, la présence dans l'espace entre la gaine et la pastille de produits de fission corrosifs, tels que l'iode, crée les conditions de la corrosion sous contrainte. Ainsi, la déformation imposée par la pastille à la gaine lors d'un transitoire de puissance globale peut provoquer une rupture de la gaine.

Or, une telle rupture de la gaine n'est pas admissible pour des raisons de sûreté puisqu'elle pourrait résulter en la libération de produits de fission dans le circuit primaire du réacteur nucléaire.

La demande de brevet EP-1 556 870 décrit un procédé permettant de déterminer, en intégrant le phénomène IPG, les valeurs limites de paramètres de fonctionnement d'un réacteur nucléaire. Plus précisément, les valeurs limites déterminées sont telles que, en cas d'apparition d'un transitoire accidentel de puissance globale qui va se traduire par une augmentation de la puissance locale dans tout le coeur, le phénomène IPG ne se traduira pas par une rupture de gaine de crayon de combustible nucléaire.

Ce procédé permet ainsi de définir des domaines d'exploitation dans lesquels le réacteur nucléaire peut fonctionner de manière sûre, même si un transitoire accidentel de puissance globale survient. Des alarmes peuvent également être mises en place pour vérifier que, au cours de l'exploitation du réacteur nucléaire, les valeurs limites déterminées ne sont pas dépassées.

La demande de brevet EP-0 405 863 décrit un procédé de contrôle d'un réacteur nucléaire réalisant des calculs périodiques à partir de mesures fournies par des capteurs présents dans le réacteur.

Le phénomène IPG est notamment pénalisant vis-à-vis d'un mode de fonctionnement particulier des réacteurs nucléaires. Il s'agit du Fonctionnement Prolongé à Puissance Intermédiaire (FPPI) ou Extended Reduced Power Operation (ERPO) en anglais.

En France, le fonctionnement prolongé à puissance intermédiaire est plus précisément défini comme étant le fonctionnement du réacteur en régime permanent, à une puissance globale PI inférieure ou égale à par exemple environ 92% de sa puissance nominale PN sur par exemple une durée cumulée de plus de 8 h par plage de 24 h glissantes.

Un tel mode de fonctionnement a pour effet de déconditionner les crayons.

Lors d'une diminution de la puissance globale, la puissance diminue localement. Il en résulte une diminution de température dans les pastilles et dans la gaine de chaque crayon, qui entraîne une diminution des dilatations thermiques de ces éléments. Chaque pastille possédant un coefficient de dilatation thermique plus important que celui de la gaine associée, elle rétrocède donc une dilatation absolue plus importante.

Ceci est en outre accentué par le fait que, pour une baisse de puissance locale donnée, la variation de température dans chaque pastille est plus importante que celle dans la gaine.

Ainsi, lors d'un fonctionnement en mode FPPI, pour les crayons où le contact entre la gaine et les pastilles n'est pas établi, le jeu radial s'agrandit. En ce qui concerne les crayons où le jeu était fermé, le jeu se réouvre.

En cas de réouverture du jeu, il y a fluage en compression vers l'intérieur de la gaine par effet de pression. Les contraintes apparaissant dans la gaine en cas de transitoire accidentel de puissance en cours de fonctionnement en mode FPPI atteignent ainsi des valeurs plus importantes que si le transitoire a lieu alors que le réacteur fonctionne à puissance globale nominale.

Les risques d'une rupture par phénomène IPG sont donc accrus lorsque le réacteur fonctionne en mode FPPI.

Afin de permettre aux opérateurs de réacteurs nucléaires d'évaluer dans quelle mesure ils peuvent utiliser le mode FPPI, sans remettre en cause l'intégrité des gaines des crayons, un paramètre a été mis au point, le crédit K.

Ce paramètre, qui est représentatif de la manoeuvrabilité du réacteur nucléaire, est défini par la formule :

$$ K = K_0 - \sum_i A_i T_i + \sum_j B_j T_j $$

où $K_0$ est la valeur initiale du crédit K ;
$A_i$ est un coefficient de déconditionnement calculé à partir des lois de déconditionnement ;
$T_i$ est la durée d'une phase i d'utilisation du mode FPPI ;
$B_j$ est un coefficient de reconditionnement calculé à partir des lois de reconditionnement ; et
$T_j$ est la durée d'une phase j de fonctionnement à puissance globale nominale après une période de fonctionnement en mode FPPI.

L'opérateur est capable à partir de cette formule de calculer l'évolution au cours d'un cycle de la valeur du crédit K en fonction des phases successives de fonctionnement en mode FPPI et à puissance globale nominale.

Plus la valeur du crédit K est faible, moins l'opérateur a la possibilité d'utiliser le mode FPPI. Lorsque la valeur du crédit K est 0, l'opérateur ne peut plus fonctionner en mode FPPI et doit uniquement faire fonctionner le réacteur à puissance nominale ou l'arrêter.

Afin d'augmenter la valeur du crédit K, l'opérateur peut choisir de faire fonctionner le réacteur à la puissance globale nominale pendant une certaine durée.

L'établissement de cette formule, et notamment celle des coefficients Ai et Bj, qui dure pratiquement deux ans nécessite des calculs très importants menés pendant plusieurs mois sur des calculateurs fonctionnant en parallèle.

Compte tenu de cette lourdeur de calcul des coefficients Ai et Bj, la détermination de la valeur du crédit K est réalisée de façon générique pour un réacteur, un assemblage de combustible et une gestion donnés ce qui impose l'introduction de nombreux conservatismes.

Si l'utilisation du crédit K permet de garantir un fonctionnement sûr du réacteur nucléaire, elle conduit donc malheureusement à une manoeuvrabilité limitée.

Un but de l'invention est de résoudre ce problème en fournissant un procédé de détermination de la valeur d'un paramètre représentatif de la manoeuvrabilité d'un coeur de réacteur nucléaire qui permette d'accroître la manoeuvrabilité du réacteur tout en garantissant un fonctionnement sûr.

A cet effet, l'invention a pour objet un procédé selon la revendication 1.

Selon des modes particuliers de réalisation, le procédé peut comprendre l'une ou plusieurs des caractéristiques des revendications 2 à 8.

L'invention a en outre pour objet un système de détermination selon les revendications 9 ou 10, un programme d'ordinateur selon la revendication 11 et un support selon la revendication 12.

L'invention sera mieux comprise à la lecture de la description qui va suivre, donnée uniquement à titre d'exemple, et faite en se référant aux dessins annexés, sur lesquels :

- la figure 1 est une vue schématique illustrant un réacteur nucléaire à eau pressurisée,
- la figure 2 est une vue schématique latérale d'un assemblage de combustible du coeur du réacteur de la figure 1,
- la figure 3 est une vue schématique en coupe longitudinale d'un crayon de combustible de l'assemblage de la figure 2, et
- la figure 4 est un organigramme illustrant des étapes successives du procédé mis en oeuvre dans le réacteur de la figure 1.

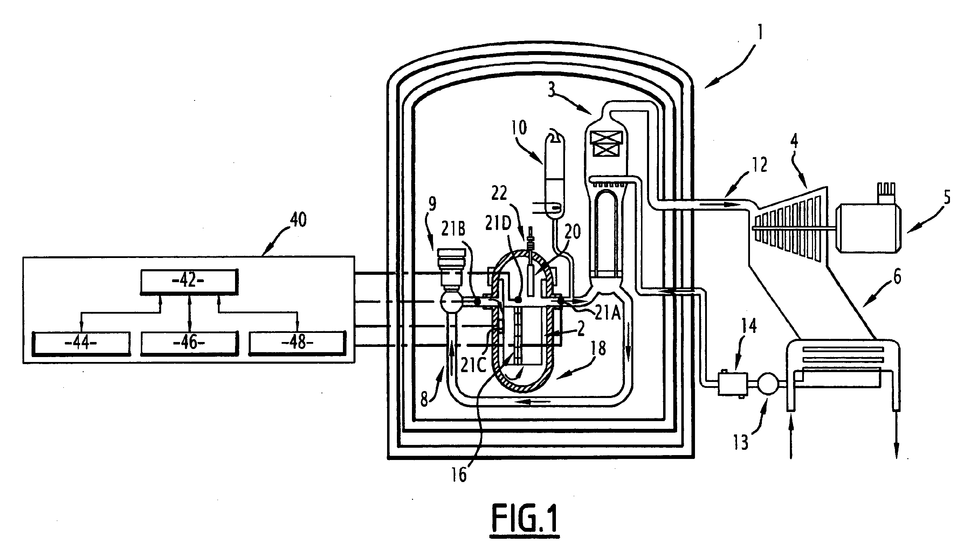

La figure 1 illustre schématiquement un réacteur nucléaire 1 à eau pressurisée qui comprend classiquement :

- un coeur 2,
- un générateur de vapeur 3,
- une turbine 4 couplée à un générateur 5 d'énergie électrique, et
- un condenseur 6.

Le réacteur 1 comprend un circuit primaire 8 équipé d'une pompe 9 et dans lequel circule de l'eau sous pression, selon le trajet matérialisé par les flèches sur la figure 1. Cette eau remonte notamment au travers du coeur 2 pour y être réchauffée en assurant la réfrigération du coeur 2.

Le circuit primaire 8 comprend en outre un pressuriseur 10 permettant de mettre sous pression l'eau circulant dans le circuit primaire 8.

L'eau du circuit primaire 8 alimente également le générateur de vapeur 3 où elle est refroidie en assurant la vaporisation d'eau circulant dans un circuit secondaire 12.

La vapeur produite par le générateur 3 est canalisée par le circuit secondaire 12 vers la turbine 4 puis vers le condenseur 6 où cette vapeur est condensée par échange de chaleur indirect avec de l'eau de refroidissement circulant dans le condenseur 6.

Le circuit secondaire 12 comprend en aval du condenseur 6 une pompe 13 et un réchauffeur 14.

De manière classique également, le coeur 2 comprend des assemblages 16 de combustible nucléaire qui sont chargés dans une cuve 18. Un seul assemblage 16 est représenté sur la figure 1, mais le coeur 2 comprend par exemple 157 assemblages 16.

Le réacteur 1 comprend des grappes de commande 20 qui sont disposées dans la cuve 18 au-dessus de certains assemblages 16. Une seule grappe 20 est représentée sur la figure 1, mais le coeur 2 peut comprendre par exemple environ 60 grappes 20.

Les grappes 20 peuvent être déplacées par des mécanismes 22 pour venir s'insérer dans les assemblages de combustible 16 qu'elles surplombent.

Classiquement, chaque grappe de commande 20 comprend des crayons comportant un ou plusieurs matériaux absorbant les neutrons.

Ainsi, le déplacement vertical de chaque grappe 20 permet de régler la réactivité du réacteur 1 et autorise des variations de la puissance globale P fournie par le coeur 2 depuis la puissance nulle jusqu'à la puissance nominale PN, en fonction de l'enfoncement des grappes 20 dans les assemblages 16.

Certaines de ces grappes 20 sont destinées à assurer la régulation du fonctionnement du coeur 2, par exemple en puissance ou en température, et sont dénommées grappes de contrôle. D'autres sont destinées uniquement à l'arrêt du réacteur 1 et sont dénommées grappes d'arrêt.

Les grappes 20 sont réunies en groupes en fonction de leur nature et de leur destination. Par exemple pour les réacteurs de type 900 MWe, ces groupes sont dénommés groupes G1, G2, N1, N2, R, SA, SB, SC, SD...

Le réacteur 1 comprend également un certain nombre de capteurs de mesure de valeurs effectives de paramètres de fonctionnement du réacteur, notamment un thermocouple 21A de mesure de la température moyenne de l'eau du circuit primaire en sortie de la cuve 18 et un thermocouple 21B de mesure de la température moyenne de l'eau du circuit primaire en entrée de la cuve 18.

De manière classique également, le réacteur nucléaire 1 comprend des chambres externes 21C de mesure du flux neutronique, lesquelles chambres 21C sont disposées autour de la cuve 18 du coeur 2. Le nombre et les positions des chambres 21C, habituellement dénommées « chambres excore », varient en fonction du modèle du réacteur 1.

De manière classique encore, le réacteur 1 comprend des thermocouples 21 D disposés dans le coeur 2 au-dessus d'assemblages 16 pour mesurer la température de l'eau du circuit primaire en sortie des assemblages 16. Une seule chambre 21C et un seul capteur 21 D ont été représentés sur la figure 1.

Les chambres excore 21C et les thermocouples 21 D fournissent des informations relatives à la répartition aussi bien axiale, c'est-à-dire verticalement, que radiale de la puissance locale dans le coeur.

Pour étalonner les différents capteurs, et notamment les chambres 21C et les thermocouples 21 D, le réacteur comprend également une instrumentation dite « incore » (non-représentée) comprenant des sondes mobiles fixées à l'extrémité de câbles souples pour permettre leur insertion à l'intérieur de voies de mesure de certains des assemblages 16. Ces sondes sont introduites régulièrement dans le coeur 2 afin de recaler les valeurs mesurées par les différents capteurs par rapport aux mesures effectuées par ces sondes, et ainsi d'étalonner les différents capteurs du réacteur 1.

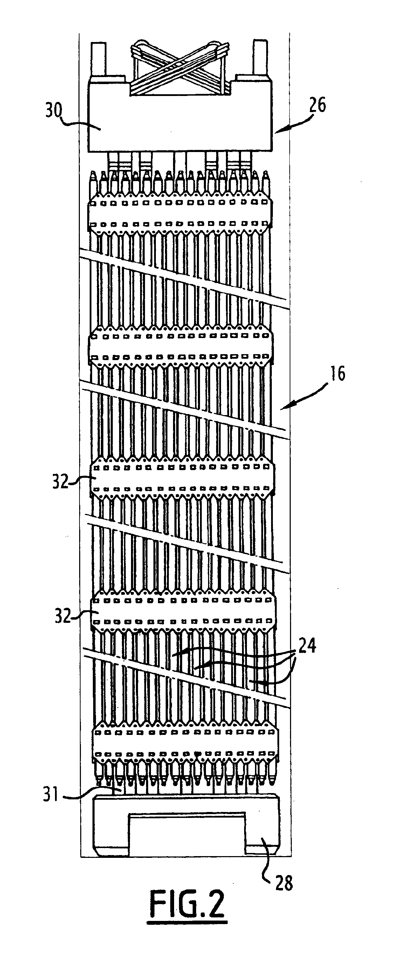

Comme illustré par la figure 2, chaque assemblage 16 comprend de manière classique un réseau de crayons de combustible 24 et un squelette 26 de support des crayons 24.

Le squelette 26 comprenant classiquement un embout inférieur 28, un embout supérieur 30, des tubes-guides 31 reliant les deux embouts 30 et 28 et destinés à recevoir des crayons des grappes de commande 20 et des grilles entretoises 32.

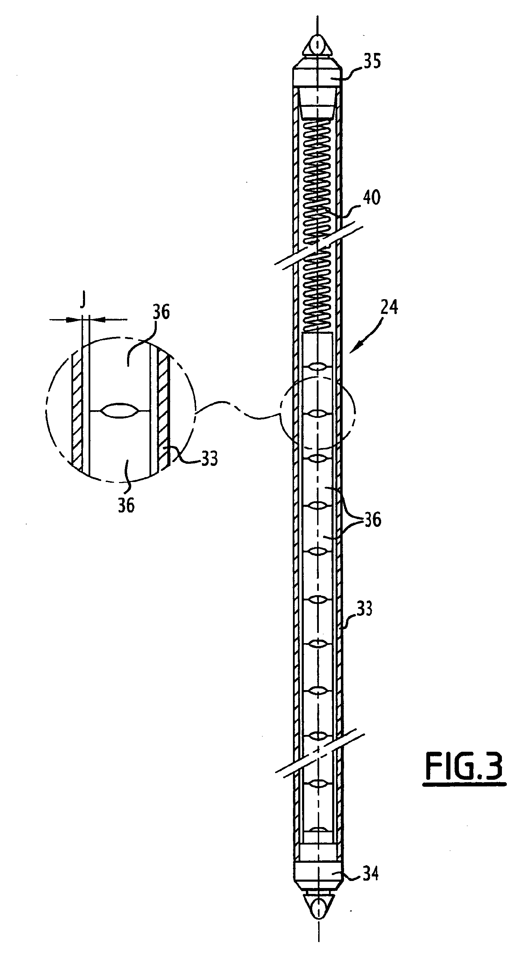

Comme illustré par la figure 3, chaque crayon de combustible 24 comprend de manière classique, une gaine 33 sous forme d'un tube fermé à son extrémité inférieure par un bouchon inférieur 34 et à son extrémité supérieure par un bouchon supérieur 35. Le crayon 24 comprend une série de pastilles 36 empilées dans la gaine 33 et prenant appui contre le bouchon inférieur 34. Un ressort de maintien 40 est disposé dans le tronçon supérieur de la gaine 33 pour prendre appui sur le bouchon supérieur 35 et sur la pastille 36 supérieure.

Classiquement, les pastilles 36 sont à base d'oxyde d'uranium et la gaine 33 en alliage de zirconium.

Sur la figure 3, qui correspond à un crayon de combustible 24 issu de fabrication et avant d'irradiation, il existe un jeu radial J entre les pastilles 36 et la gaine 33. Cela est illustré plus particulièrement par la partie cerclée agrandie de la figure 3.

C'est ce jeu J qui se ferme lors du conditionnement et lors du reconditionnement du crayon de combustible et qui s'ouvre lors du déconditionnement du crayon de combustible.

Comme illustré par la figure 1, le réacteur 1 comprend également un système informatique 40 de détermination d'un paramètre représentatif de la manoeuvrabilité du réacteur nucléaire 1. Le système 40 est par exemple celui utilisé plus généralement pour commander et contrôler le fonctionnement du réacteur nucléaire 1.

Ce système 40 comprend par exemple une unité de traitement d'informations 42 comprenant un ou plusieurs processeur(s), des moyens 44 de stockage des données, des moyens 46 d'entrée/sortie et éventuellement des moyens 48 d'affichage. Les moyens 44 de stockage, qui comprennent par exemple une ou plusieurs mémoires, stockent un ou plusieurs programmes d'ordinateur pour exécuter les étapes décrites ci-dessous.

Le système 40 est relié aux différents capteurs de mesure de paramètres de fonctionnement du réacteur nucléaire 1, dont les capteurs 21A à 21 D.

Dans l'exemple donné ci-dessous, le paramètre de mesure de la manoeuvrabilité du réacteur 1 calculé par le système 40 est le paramètre $\Delta$ défini par:

$$\Delta = (\sigma_\theta - \sigma_r)_{lim} - (\sigma_\theta - \sigma_r)_{sup}$$

Où $\sigma_\theta$ est la contrainte circonférentielle et normale dans une gaine 33 ;

$\sigma_r$ est la contrainte radiale et normale dans la même gaine 33 ;

$(\sigma_\theta - \sigma_r)_{sup}$ est la plus grande valeur atteinte par $(\sigma_\theta - \sigma_r)$ parmi les crayons 24 du coeur 2 ; et

$(\sigma_\theta - \sigma_r)_{lim}$ est la valeur limite de $(\sigma_\theta - \sigma_r)$ au-delà de laquelle une gaine 33 se rompt.

Cette valeur limite a par exemple été déterminée comme décrit dans le document EP-1 556 870.

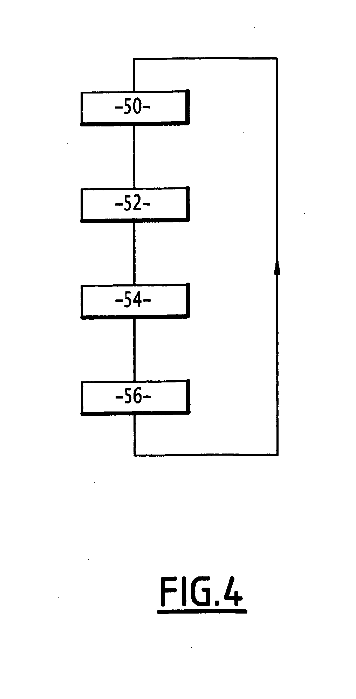

Le procédé mis en oeuvre par le système 40 pour déterminer la valeur de $\Delta$ va être maintenant décrit par référence à l'organigramme de la figure 4.

Ce procédé comprend l'exécution régulière de la boucle comprenant les étapes 50, 52, 54 et 56 au cours d'un cycle de fonctionnement du réacteur nucléaire 1. Le pas de temps d'exécution de cette boucle peut être inférieur à un mois, une semaine ou même un jour.

Dans une première étape 50, le système 40 calcule la répartition tridimensionnelle de puissance locale dans le coeur 2 au pas de temps considéré.

Plus précisément, un premier calcul grossier de la répartition tridimensionnelle de la puissance locale dans le coeur 2 est effectué par un logiciel de calcul neutronique. Le logiciel de calcul neutronique utilisé peut être un logiciel de type classique, par exemple le logiciel SMART de la société AREVA NP (marque déposée).

Ce calcul grossier est par exemple assuré en se fondant sur :

- les caractéristiques du chargement du coeur 2, c'est-à-dire la disposition et les caractéristiques des assemblages 16 présents dans le coeur 2, caractéristiques stockées, par exemple, dans les moyens 44 de stockage,
- la puissance thermique moyenne du coeur 2 établie de manière classique par le système 40 par exemple grâce aux mesures fournies par les thermocouples 21 A et 21 B, et
- la température moyenne de l'eau en entrée de cuve 18 mesurée par le thermocouple 21B,
- les positions de consigne des grappes de contrôle 20 stockées dans les moyens 44 de stockage, et
- la répartition de puissance locale déterminée lors de l'exécution précédente de la boucle d'étapes 50, 52, 54 et 56.

Les résultats de ce premier calcul grossier sont ensuite affinés en ajustant les valeurs ainsi calculées grâce aux valeurs effectives mesurées par les chambres 21C et les thermocouples 21 D.

L'utilisation d'un calcul grossier ultérieurement affiné permet d'obtenir une bonne représentation de la répartition tridimensionnelle de la puissance locale dans le coeur 2, en un temps compatible avec la fréquence de mise en oeuvre du procédé de détermination de la valeur de $\Delta$.

Ensuite, dans l'étape 52, le système 40 simule des transitoires de puissance globale, par exemple grâce au logiciel de calcul neutronique précité.

De préférence, les transitoires simulés sont les transitoires accidentels dits de catégorie 2 induisant les variations de puissance les plus fortes et les plus rapides dans le coeur 2.

Ces transitoires peuvent être par exemple:

- l'augmentation excessive de charge,
- le retrait incontrôlé de groupes de grappes de contrôle 20, alors que le réacteur 1 est en puissance,
- la chute de grappe(s) 20.

L'augmentation excessive de charge correspond à une augmentation rapide du débit de vapeur dans le générateur de vapeur 3. Une telle augmentation entraîne un déséquilibre entre la puissance thermique du coeur 2 et la charge du générateur de vapeur 3. Ce déséquilibre conduit à un refroidissement du circuit primaire 8. Du fait de l'effet modérateur et/ou de la régulation de la température moyenne dans le coeur 2 par les grappes de contrôle 20, la réactivité, et donc le flux nucléaire, augmentent dans le coeur 2. Ainsi, la puissance globale P fournie par le coeur 2 augmente rapidement.

Pour simuler ce transitoire, on considère que le débit de vapeur dans le générateur 3 augmente de sa valeur initiale jusqu'à la valeur maximale autorisée par les caractéristiques du circuit secondaire 12. Cette augmentation est par ailleurs suffisamment lente pour les niveaux de puissance étudiés afin d'éviter l'arrêt automatique du réacteur par basse pression du pressuriseur 10.

Le retrait incontrôlé de groupes de grappes de contrôle 20 alors que le réacteur fonctionne provoque une augmentation incontrôlée de la réactivité. Il en résulte une augmentation rapide de la puissance nucléaire globale P et du flux de chaleur dans le coeur 2. Jusqu'à l'ouverture d'une vanne de décharge ou d'une soupape de sûreté du circuit secondaire 12, l'extraction de chaleur dans le générateur de vapeur 3 augmente moins vite que la puissance dégagée dans le circuit primaire 8. Il en résulte un accroissement de la température et de la pression de l'eau du circuit primaire 8. Pour simuler ce transitoire, on suppose un retrait des groupes de puissance à la vitesse maximale de 72 pas/mn jusqu'à l'extraction totale.

Si une ou plusieurs des grappes de commande 20 chute dans le coeur, il en résulte une réduction immédiate de la réactivité et de la puissance globale P dans le coeur 2. En l'absence d'action protectrice, le déséquilibre ainsi induit entre le circuit primaire 8 et le circuit secondaire 12 entraîne une diminution de la température d'entrée de l'eau dans le coeur 2, ainsi qu'une augmentation de la puissance neutronique par les contre-réactions et la régulation de température, jusqu'à l'atteinte d'un nouvel équilibre entre le circuit primaire 8 et le circuit secondaire 12. La présence de la ou des grappes de commande 20 ayant chuté provoque une déformation de la distribution radiale de puissance, tandis que le retrait du groupe de régulation conduit à une modification axiale de la puissance.

Ensuite, au cours de l'étape 54, le système 40 va déterminer les crayons 24 les plus sollicités au cours des transitoires de puissance simulés au cours de l'étape 52.

Cette détermination est effectuée à partir d'un logiciel de tri.

Plus précisément, au cours de cette étape 54 on va calculer la valeur d'un paramètre représentatif de l'état de contrainte dans la gaine 33 de chaque crayon 24, par exemple la valeur de $(\sigma_\theta - \sigma_r)$.

Dans l'exemple décrit, le paramètre représentatif de l'état de contrainte et le paramètre représentatif de la manoeuvrabilité du réacteur sont fondés sur la même différence de paramètre physique $(\sigma_\theta - \sigma_r)$. Toutefois, ceci n'est pas nécessairement le cas et ces deux paramètres peuvent être fondés sur des grandeurs physiques ou des fonctions de grandeurs physiques différentes mais cohérentes entre elles.

Le calcul est assuré par exemple pour chaque crayon 24 par la répétition tout au long de son conditionnement et/ou déconditionnement et de chaque transitoire de puissance simulé, de la boucle suivante comprenant les sous-étapes consistant à :

-    calculer les nouvelles dimensions de la gaine 33 et des pastilles 36 du crayon 24 en fonction des valeurs de $(\sigma_\theta - \sigma_r)$ déterminées lors de l'exécution précédente de la boucle,
-    calculer le nombre de moles de gaz de fissions relâchées au cours du nouveau pas de temps,
-    calculer l'augmentation résultante de la pression à l'intérieur de la gaine 33 au cours du nouveau pas de temps,
-    calculer la pression de contact entre les pastilles 36 et la gaine 33 résultant des nouvelles dimensions et notamment de l'évolution de la puissance linéaire et du taux de combustion du combustible nucléaire dans le crayon 24 au cours du nouveau pas de temps, et
-    calculer la nouvelle valeur de $(\sigma_\theta - \sigma_r)$ en fonction de la nouvelle valeur de pression de contact calculée, de la nouvelle valeur de pression interne calculée et des nouvelles dimensions calculées.

Les calculs relatifs au nombre de moles de gaz de fission relâchées, à la pression interne et à la pression de contact sont effectuées non pas par résolution explicite des équations correspondantes, mais par corrélations.

Plus précisément, on utilise des corrélations pour permettre de déterminer les valeurs des grandeurs en question en fonction des valeurs des mêmes grandeurs connues pour des conditions connues (puissance linéaire, épuisement...). Ces valeurs connues proviennent par exemple d'une base de données construites à partir d'un logiciel de calcul thermomécanique. Il peut s'agir d'un logiciel classique, comme le logiciel COPERNIC de la société AREVA NP (marque déposée).

Le logiciel de tri utilisé pour l'étape 54 sera de préférence une version simplifiée du même logiciel de calcul thermomécanique.

L'utilisation de logiciels fondés sur les mêmes modèles pour mettre en oeuvre les étapes 52 et 54 permet d'assurer une robustesse et une fiabilité au procédé de détermination de la valeur du paramètre représentatif de la manoeuvrabilité du réacteur nucléaire.

L'utilisation de corrélations, plutôt que de calculs explicites, permet d'effectuer les calculs nécessaires dans des temps réduits compatibles avec le pas de temps d'exécution du procédé de détermination de la valeur de $\Delta$. Dans d'autres variantes, on peut utiliser des interpolations plutôt que des corrélations.

A l'issue de l'exécution de la boucle de l'étape 54, on connaît, pour chaque transitoire de puissance simulé, une estimation grossière de la valeur maximale $(\sigma_\theta - \sigma_r)_{max}$ de $(\sigma_\theta - \sigma_r)$ atteinte dans chaque crayon 24.

Sur la base de ces valeurs maximales, le système 40 peut identifier les crayons 24 les plus sollicités au cours des transitoires de puissance.

Ensuite, dans l'étape 56, le système 40 conduit des calculs thermomécaniques complets sur les crayons 24 les plus sollicités identifiés lors de l'étape 54.

Ces calculs sont effectués grâce à un logiciel de calcul thermomécanique de type classique, par exemple le logiciel COPERNIC de la société AREVA NP.

Ces calculs thermomécaniques complets permettent de déterminer la valeur de $(\theta_\theta - \sigma_r)_{sup}$ et ainsi de calculer la valeur effective de $\Delta$. Cette valeur effective peut être fournie notamment à un opérateur en charge du réacteur 1, par exemple par les moyens 48 d'affichage.

L'opérateur est alors à même de savoir dans quelle mesure il peut faire fonctionner le réacteur en mode en FPPI, ou s'il doit au contraire le faire fonctionner à puissance globale nominale PN.

De même, la valeur effective de $\Delta$ calculée par le procédé décrit ci-dessus peut être utilisée par le système 40 pour déclencher l'exécution de manière automatique de certaines opérations au sein du réacteur 1, par exemple l'émission d'une alarme, l'arrêt du réacteur 1, l'augmentation de la puissance globale.

La valeur déterminée de $\Delta$ est donc utilisée pour commander et/ou contrôler le fonctionnement du réacteur 1.

Comme indiqué précédemment, les étapes 50, 52, 54 et 56 sont répétées de manière régulière au cours d'un cycle de fonctionnement du coeur, ce qui permet d'actualiser la valeur de Δ.

Ce calcul quasiment en temps réel de Δ permet de s'affranchir des conservatismes utilisés jusqu'à présent pour calculer le crédit K et donc de gagner en manoeuvrabilité tout en assurant un fonctionnement sûr du réacteur nucléaire.

De manière générale, le procédé décrit ci-dessus peut être mis en oeuvre pour calculer des valeurs d'autres paramètres représentatifs de la manoeuvrabilité, que Δ.

Un tel paramètre peut être fondé sur la contrainte circonférentielle et normale $\sigma_\theta$ uniquement ou sur une densité d'énergie de déformation. Il peut également s'agir du crédit K.

Les principes ci-dessus peuvent s'appliquer à d'autres types de réacteur que les réacteurs à eau pressurisée, par exemple aux réacteurs à eau bouillante.

Dans certaines variantes, l'étape 50 peut utiliser d'autres calculs que ceux décrits ci-dessus.

Dans certaines variantes également, un seul transitoire de puissance est simulé au cours de l'étape 52. De même, le ou les transitoires simulés peuvent être des transitoires de puissance locale ou globale.

Dans certaines variantes également, l'étape 52 peut faire intervenir des boucles différentes de celles décrites. De même, une corrélation ou interpolation peut être utilisée uniquement pour déterminer la pression de contact entre les pastilles 36 et la gaine 33 d'un crayon 24.

Dans d'autres variantes encore, on peut au cours de l'étape 54 identifier un unique crayon le plus sollicité, l'étape 54 étant alors mise en oeuvre sur ce crayon unique.

## Revendications

1. Procédé de détermination de la valeur d'un paramètre représentatif de la manoeuvrabilité d'un réacteur nucléaire, le coeur comprenant des assemblages (10) de combustible nucléaire, chaque assemblage (16) comportant des crayons (24) de combustible nucléaire où du combustible nucléaire est enfermé dans une gaine (33), /
le procédé comprenant l'exécution périodique au cours d'un même cycle de fonctionnement du réacteur des étapes suivantes :

    a) calcul, à partir de mesures fournies par des capteurs (21A-21D) présents dans le réacteur (1), de la répartition tridimensionnelle de la puissance locale dans le coeur (2),
    b) simulation d'au moins un transitoire accidentel de puissance appliqué à la répartition tridimensionnelle de puissance locale calculée,

    c) identification par des calculs thermomécaniques d'au moins un crayon (24) le plus susceptible de présenter une rupture de sa gaine (33) au cours du transitoire de puissance simulé, et
    d) détermination, par des calculs thermomécaniques sur le crayon identifié, de la valeur du paramètre représentatif de la manoeuvrabilité du réacteur.

2. Procédé selon la revendication 1, dans lequel l'étape c) comprend une sous-étape c1) de calcul de la valeur maximale d'un paramètre représentatif de l'état de contrainte dans la gaine (33) de chaque crayon (24) au cours du transitoire de puissance simulé.

3. Procédé selon la revendication 2, **caractérisé en ce que**, dans la sous-étape c1), on calcule la pression de contact entre les pastilles (36) et la gaine (33) du crayon considéré par corrélation ou interpolation à partir de valeurs préalablement calculées.

4. Procédé selon l'une quelconque des revendications précédentes, dans lequel les étapes a) à d) sont exécutées périodiquement avec un pas de temps inférieur à un mois.

5. Procédé selon la revendication 4, dans lequel les étapes a) à d) sont exécutées avec un pas de temps inférieur à une semaine.

6. Procédé selon la revendication 5, dans lequel les étapes a) à d) sont exécutées avec un pas de temps inférieur à un jour.

7. Procédé selon l'une des revendications précédentes, dans lequel le réacteur nucléaire est un réacteur nucléaire à eau pressurisée.

8. Procédé selon l'une des revendications précédentes, comprenant une étape e) d'utilisation de la valeur déterminée pour commander et/ou contrôler le fonctionnement du réacteur nucléaire.

9. Système (40) de détermination de la valeur d'un paramètre représentatif de la manoeuvrabilité, **caractérisé en ce qu'**il comprend des moyens (42, 44, 46, 48) de mise en oeuvre des étapes d'un procédé selon l'une quelconque des revendications précédentes.

10. Système selon la revendication 9, le système comprenant au moins un ordinateur (42) et des moyens (44) de stockage dans lesquels sont stockés au moins un programme pour l'exécution d'étapes du procédé de détermination mis en oeuvre par le système.

11. Programme d'ordinateur comprenant des instructions pour l'exécution des étapes d'un procédé selon l'une quelconque des revendications 1 à 8.

**12.** Support utilisable dans un ordinateur et sur lequel est enregistré un programme selon la revendication 11.

**Patentansprüche**

**1.** Verfahren zur Bestimmung des Werts eines für die Steuerbarkeit eines Kernreaktors, dessen Herz Kernbrennstoffmontagen (10) umfasst, wobei jede Montage (16) Kernbrennstäbe aufweist, wobei Kernbrennstoff in einer Hülle (33) eingeschlossen ist, repräsentativen Kennwerts,
wobei das Verfahren die periodische Durchführung der folgenden Schritte während eines selben Betriebszyklus des Reaktors umfasst:

a) Berechnung, ausgehend von den Messwerten, die von Sensoren (21A-21 D) geliefert werden, die in dem Reaktor (1) vorhanden sind, der dreidimensionalen Verteilung der lokalen Leistung im Herz (2),
b) Simulation mindestens einer zufallsbedingten Leistungstransiente, angewendet auf die berechnete dreidimensionale lokale Leistungsverteilung,
c) Identifizierung, durch thermomechanische Berechnungen, mindestens eines Brennstabs (24), der am empfindlichsten ist, einen Riss seiner Hülle (33) während der stimulierten Leistungstransiente aufzuweisen, und
d) Bestimmung, durch thermomechanische Berechnungen für den identifizierten Brennstab, des Werts des für die Steuerbarkeit des Reaktors repräsentativen Kennwerts.

**2.** Verfahren nach Anspruch 1, wobei der Schritt c) einen Unterschritt c1) der Berechnung des maximalen Werts eines für den Spannungszustand in der Hülle (33) jedes Brennstabs (24) repräsentativen Kennwerts während der simulierten Leistungstransiente umfasst.

**3.** Verfahren nach Anspruch 2, **dadurch gekennzeichnet, dass** im Unterschritt c1) der Kontaktdruck zwischen den Tabletten (36) und der Hülle (33) des entsprechenden Brennstabs durch Korrelation oder Interpolation ausgehend von zuvor berechneten Werten berechnet wird.

**4.** Verfahren nach einem der vorangehenden Ansprüche, wobei die Schritte a) bis d) periodisch mit einem Zeitschritt von weniger als einem Monat durchgeführt werden.

**5.** Verfahren nach Anspruch 4, wobei die Schritte a) bis d) mit einem Zeitschritt von weniger als einer Woche durchgeführt werden.

**6.** Verfahren nach Anspruch 5, wobei die Schritte a) bis d) mit einem Zeitschritt von weniger als einem Tag durchgeführt werden.

**7.** Verfahren nach einem der vorangehenden Ansprüche, wobei der Kernreaktor ein Druckwasserkernreaktor ist.

**8.** Verfahren nach einem der vorangehenden Ansprüche, das einen Schritt e) der Benutzung des bestimmten Werts zur Steuerung und/oder Überwachung des Betriebs des Kernreaktors umfasst.

**9.** System (40) zur Bestimmung des Werts eines für die Steuerbarkeit repräsentativen Kennwerts, **dadurch gekennzeichnet, dass** es Mittel (42, 44, 46, 48) zur Umsetzung der Schritte eines Verfahrens nach einem der vorangehenden Ansprüche umfasst.

**10.** System nach Anspruch 9, wobei das System mindestens einen Rechner (42) und Speichermittel (44) umfasst, in denen mindestens ein Programm für die Durchführung von Schritten des Bestimmungsverfahrens gespeichert ist, das von dem System umgesetzt wird.

**11.** Rechnerprogramm, das Anweisungen für die Durchführung der Schritte eines Verfahrens nach einem der Ansprüche 1 bis 8 umfasst.

**12.** Medium, das in einem Rechner verwendbar ist und auf dem ein Programm nach Anspruch 11 aufgezeichnet ist.

**Claims**

**1.** A method for determining the value of a parameter representative of the maneuverability of a nuclear reactor, the core comprising nuclear fuel assemblies (10), each assembly (16) including nuclear fuel rods (24) where nuclear fuel is contained in a cladding (33),
the method comprising the periodic execution during a same operating cycle of the reactor of the following steps:

a) calculating, from measurements provided by sensors (21A-21D) present in the reactor (1), the three-dimensional distribution of the local power in the core (2),
b) simulating at least one accidental power transient applied to the computed local three-dimensional power distribution,

c) identifying by thermomechanical computations at least one rod (24) likeliest to experience a rupture of its cladding (33) during the simulated power transient, and

d) determining by thermomechanical computations on the identified rod the value of the parameter representative of the maneuverability of the reactor.

2. The method according to claim 1, wherein step c) comprises a sub-step c1) for calculating the maximum value of a parameter representative of the strain state in the cladding (33) of each rod (24) during the simulated power transient.

3. The method according to claim 2, **characterized in that**, in sub-step c1), the contact pressure is calculated between the pellets (36) and the cladding (33) of the considered rod by correlation or interpolation from previously calculated values.

4. The method according to any one of the preceding claims, wherein steps a) to d) are executed periodically with a time pitch shorter than one month.

5. The method according to claim 4, wherein steps a) to d) are executed periodically with a time pitch shorter than one week.

6. The method according to claim 5, wherein steps a) to d) are executed periodically with a time pitch shorter than one day.

7. The method according to one of the preceding claims, wherein the nuclear reactor is a pressurized water nuclear reactor.

8. The method according to one of the preceding claims, comprising a step e) for using the determined value to control and/or monitor the operation of the nuclear reactor.

9. A system (40) for determining the value of a parameter representative of the maneuverability, **characterized in that** it comprises means (42, 44, 46, 48) for implementing the steps of a method according to any one of the preceding claims.

10. The system according to claim 9, the system comprising at least one computer (42) and storage means (44) in which at least one program is stored for executing steps of the determination method implemented by the system.

11. A computer program comprising instructions for executing the steps of a method according to any one of claims 1 to 8.

12. A medium usable in a computer and on which the program according to claim 11 is recorded.

FIG.1

## FIG.2

FIG.3

FIG.4

**EP 2 218 078 B1**

## RÉFÉRENCES CITÉES DANS LA DESCRIPTION

**Documents brevets cités dans la description**

- EP 1556870 A

- EP 0405863 A